# NEW EUROPEAN PATENT SPECIFICATION

(11) **EP 2 340 928 B2**
(45) Date of publication and mention of the opposition decision: **23.11.2022**
(45) Mention of the grant of the patent: 11.04.2018
(21) Application number: 11000615.2
(22) Date of filing: 12.07.2002
(51) Int. Cl.: B31F 1/07, B44C 5/04

(54) **Embossed-in-register direct pressure laminate manufacturing process**
Verfahren zur Herstellung von DPL-Laminate mit dekorsynchroner Prägung
Procédé de fabrication des stratifiés DPL avec un décor synchrone constitué de gaufrage et d'impression

(30) Priority: 13.07.2001 US 903807
(43) Date of publication of application: 06.07.2011
(62) Divisional of application: 02752271.3
(73) Proprietor: Flooring Technologies Ltd., Kalkara SCM 1001 (MT)
(72) Inventor: Garcia, Eugenio Cruz, 46700 Gandia (ES)
(74) Representative: Gramm, Lins & Partner Patent- und Rechtsanwälte PartGmbB

(56) References cited:
- EP-A1- 0 020 001
- WO-A1-01/48333
- WO-A1-01/96689
- WO-A1-97/31775
- WO-A1-97/31776
- AU-B2- 519 917
- AU-B2- 519 917
- CA-A- 1 179 590
- CH-A5- 645 301
- CH-A5- 645 301
- GB-A- 1 215 971
- GB-A- 1 262 850
- GB-A- 1 262 850
- GB-A- 2 063 178
- GB-A- 2 088 280
- GB-A- 2 088 280
- US-A- 3 814 647
- US-A- 3 814 647
- US-A- 4 092 199
- US-A- 5 391 340

## Description

### BACKGROUND OF THE INVENTION

### Field of the Invention

The present invention relates to laminated materials. More particularly, the present invention relates to a method of fabricating laminated materials having decorative motifs and surface textures that are mechanically embossed in registration with the decorative motifs.

Because of their look and feel, traditional building and finishing materials, such as fine woods, slate, granite, stones, brick, and concrete are generally, preferred by consumers. However, such materials tend to be expensive to produce and to install. For example, while a solid wood floor has a highly valued luxury appearance, in practice the required materials and labor required to install such floors can be prohibitively expensive.

There are many alternatives to traditional building and finishing materials, including laminate and high-pressure laminate boards (HPL). However, in general such alternatives do not possess the realistic look and texture of the traditional building and finishing materials. For example, most alternatives having an outer surface with a wood motif look fake, and thus can readily be identified as something other than traditional wood. Furthermore, while high quality laminate boards or HPL boards may visually look like a traditional wood, their textures readily reveal that they are not.

One problem with most of the alternatives to the traditional building and finishing materials is that their surface textures do not match their decorative motifs. For example, a visual depiction of a wood knot does not match the surface texture characteristics of a wood knot. This significantly reduces the attractiveness of the alternative to consumers.

One prior art approach to matching the surface texture of an alternative material to its decorative motif is chemical embossing. In chemical embossing, the surface texture of the alternative material is developed by chemically reacting an ink that forms the decorative motif with an agent added to a sub-surface layer. While somewhat successful, the resulting surface texture tends to lack the texture sharpness and three-dimensional characteristics of traditional materials. International PCT publication WO 97/31775 discloses a process for manufacturing a decorative thermosetting laminate, particularly a HPL or CPL process. A mechanical embossing is carried out during pressing of the laminate, such that the embossed texture matches the printed decor on a melamine-formaldehyde impregnated decor paper. Another alternative to the traditional building and finishing materials are DPL boards (direct-pressure laminates). However, this alternative does not produce a satisfactory result either.

Another method of forming a surface texture of an alternative material has been suggested, that method being a DPL board with mechanical embossing. This method is interesting because of the possibility of high texture sharpness and high-quality three-dimensional characteristics. However, mechanical embossing the surface texture to match the decorative motif such that the resulting product both looks and feels like a traditional building or finishing material (referred to hereinafter as embossed-in-registration) has been problematic because of the extreme difficulty of accurately registering mechanical embossment with the decorative motif. Furthermore, the difficulty of accurately maintaining an embossed-in-registration alignment during production has prevented mechanical embossed-in-registration systems from becoming a reality.

Accordingly, there is a need for a workable method of fabricating alternative building or finishing materials where the alternatives have the realistic look and feel of traditional products. A method of producing mechanically embossed-in-registration alternative products would be even more beneficial. More beneficial still would be a method of producing mechanically embossed-in-registration alternative products that is commercially viable. International PCT publication WO 01/96689 A1, which is prior art in the sense of Article 54(3) EPC, discloses a method of fabricating a DPL product having an embossed texture which matches the printed decor of the decor sheet.

### SUMMARY OF THE INVENTION

The principles of the present invention provide for a method of fabricating DPL building and finishing materials that have decorative motifs and surface textures that are mechanically embossed in registration with the decorative motifs as defined in claim 1.

An embodiment includes milling a reference edge on a board, and then locating a resin soaked paper having a decorative motif on that board using the reference edge such that the decorative motif has a predetermined position relative to the reference edge. Beneficially, the paper is adhered to the board using static electricity. The board and paper are then moved into a press machine and accurately positioned within the press machine, using the reference edge as a guide, such that the decorative motif assumes a predetermined position relative to a press plate having a predetermined temperature. The press machine is closed, and the hot press plate presses the paper into the board with a predetermined force for a predetermined period of time.

Beneficially, the resin and paper are carefully controlled as to dimensions and material composition. Beneficially, the paper is manufactured by one supplier, on one machine, using materials from the same supplier, and with careful attention to cellulose materials, spool winding directions and spool winding tensions. Beneficially, the resin is manufactured by one supplier, using one reaction vessel, using materials from the same source, and with careful attention to material mixing and solid content.

The press plate, which has a three-dimensional surface, is manufactured such that the press plate surface matches the decorative motif when the press plate is heated to its operating temperature.

In practice it is generally better to use a slow curing resin and lower press operating temperatures then in the prior art. This improves the quality of the final surface.

If the surface texture has a roughness sufficient to significantly disturb the pressure distribution across the paper and board during embossing, the board can be appropriately hollowed prior to embossing to even out the pressure distribution.

### BRIEF DESCRIPTION OF THE DRAWINGS

In the drawings, in which like reference numerals and letters indicate corresponding parts throughout the several views:
Figure 1 illustrates a suitable substrate assembly for being mechanically embossed-in-registration;
Figure 2 illustrates a press for producing an embossed-in-registration product; and
Figure 3 illustrates an embossed-in-registration product.

### DETAILED DESCRIPTION OF THE ILLUSTRATED EMBODIMENT

The principles of the present invention are incorporated in a subsequently described method of mechanically producing an embossed-in-registration building or finishing product.

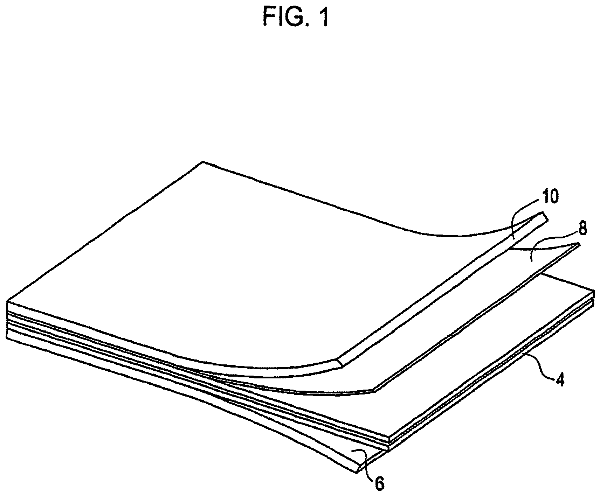

Direct-pressure laminates (DPL) themselves are well known. Turning now to Figure 1, prior art direct pressure laminates are typically fabricated from a base board 4, which is a medium density or a high density fiberboard or chipboard. Then, one or more kraft paper sheets 6 (for clarity, Figure 1 shows only one paper sheet) impregnated with selected resins are located on and/or under the base board 4. Then, a decorative cellulose paper sheet 8 about 0.15 mm thick and impregnated with a melamine solution is placed on the kraft paper sheet. Over the decorative cellulose paper sheet 8 is one or more protective overlay sheets 10. The overlay sheet is made of a highly resistant paper having corundum (AL₂O₃) impregnated in a melamine solution. It is also possible to include different papers between the decorative cellulose paper sheet and the base board.

The structure of Figure 1 is then pressed under heat (180-220 °C) and pressure (approximately 20-30 Kg/cm²) until the resins thermoset. The result is an extremely hard and permanent product called a "direct-pressure laminate (DPL)".

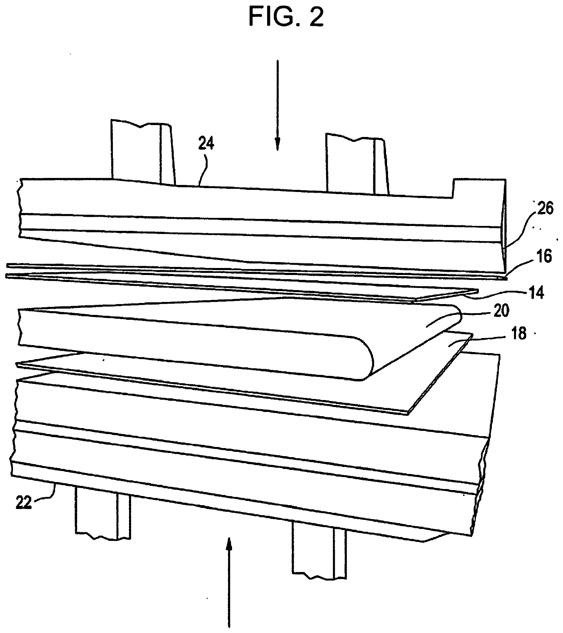

The principles of the present invention relate to improved direct pressure laminates. In those direct pressure laminates the surface texture of the finished product is registered with the decorative motif on a paper sheet. That surface texture is produced by a press machine such as that illustrated in Figure 2. With reference to that figure, to produce a direct pressure laminate according to the principles of the present invention, a board substrate 20, a melamine resin soaked decorative paper sheet 14, and one or more protective overlay sheets 16 (and possibly other sheets such as a base sheet 18) are accurately located in a press machine. That press machine includes a base 22, a top press 24, and a press plate 26 having a three-dimensional surface. Significantly, the press plate's (described in more detail subsequently) surface includes ridges and/or depressions that are aligned with a decorative motif on the decorative paper sheet 14. The board substrate 20, the decorative paper sheet 14, and the protective overlay sheet 16 (and the base sheet 18, if present) are then heated at 160-220 °C and pressed together at 20-40 Kg/cm² for 20 to 60 seconds. This cures the melamine and forms an embossed-in-register direct-pressure laminate product.

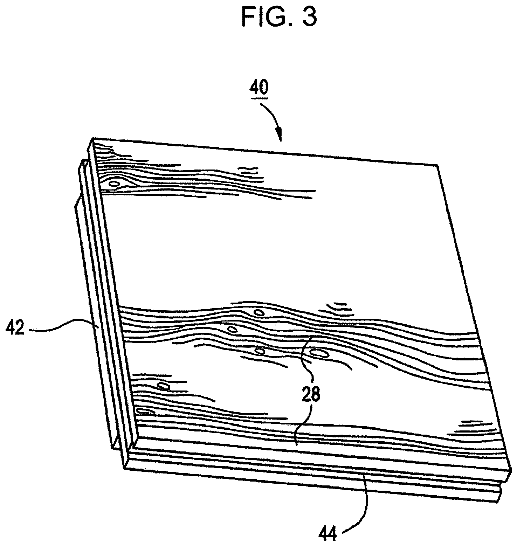

Turning now to Figure 3, the resulting direct-pressure laminate 40 has a surface texture, embossed by the press plate 26, that is registered with a decorative motif 28 on the decorative paper sheet 14. By registration it is meant that the embossed texture coincides or matches with the decorative motif of the decorative paper sheet 14 so as to provide a realistic imitation of a natural material.

The various sheets shown in Figure 2 are similar to those of prior art direct pressure laminate sheets shown in Figure 1, but the sheets of Figure 2 have tightly controlled parameters (as discussed subsequently). The board substrate 20 can be a medium density or high density fiberboard (chipboard). Prior to going into the press machine, the decorative paper sheet 14, the one or more protective overlay sheets 16, and the base sheet 18 (if used) are positioned on the board substrate 20. Beneficially, those sheets are attached to the board substrate using static electricity. Furthermore, the protective overlay sheets 16, and the base sheet 18 can be impregnated with a resin, which need not be the same melamine resin used to impregnate the decorative paper sheet 14.

While the foregoing generally describes pressing and heating when fabricating embossed-in-registration products, additional knowledge may be helpful.

First, various parameters of the resins and papers should be controlled such that tight dimensions are ensured, particularly with respect to dilatation, such as during impregnation. In particular, the paper has to be highly homogenous to produce carefully controlled long side and short side dilations. It is convenient to ensure that the paper comes from the same manufacturer. Further, that manufacturer should only use cellulose paste from one origin. That manufacturer should also fabricate all paper on the same paper making machine, using paper fibers with carefully controlled ash content and a consistent color. Additionally, the manufacturer should supply paper from the same location on the manufacturing spool. Also, the paper manufacturer should not rewind the paper since that may change the orientation of the paper fibers. The foregoing helps warrant that the impregnated papers will always have the same final dimensions.

Furthermore, the warehousing of the supplied paper before use is also important. Time, temperature, and humidity should be carefully controlled to help ensure a consistent paper.

All resins (such as melamine) should also be carefully controlled. It is convenient to ensure that the resins come from the same manufacturer. Further, that manufacturer should only use (melamine) powder from the same source, should ensure that all additives have the same quality and are from the same origin, and should mix resins in the same reactor. Great care should be taken to ensure that the supplied resins have a constant solids content. Again, the foregoing helps warrant that the impregnated papers will always have the same final dimensions.

Furthermore, the impregnation process itself should be carefully controlled. When dipping the paper into the melamine resin to impregnate the paper, the paper should undergo a constant, uniform melamine load. This ensures homogeneous absorption of the resins in the paper. To help ensure a constant, uniform load the same impregnation machine should be used for all papers. Furthermore, the impregnation machine band tension and band oscillations, which are very important to the final result, should be very precisely controlled.

The tight control of the paper and resin described above is important. Since the texture of the decorative motif is embossed into impregnated paper, to obtain a quality product an exact knowledge of the dimensions of the impregnated paper is required. Once those dimensions are established it is possible to emboss-in-register using a prefabricated press plate.

The press plate should be carefully designed such that the press plate has the correct dimensions at the operating temperature. When the press plate is in the press machine the press plate is hot, which causes the press plate to dilate. It is when the press plate is dilated that the press plate texture must match the decorative motif of the impregnated decorative paper. Therefore, the dimensions of the decorative motif must compensate for the dilations of the hot press plate. The decorative motif information is provided to the press plate manufacturer, which then fabricates a press plate that is properly registered, when hot, with the decorative motif.

With a properly impregnated paper and a properly designed press plate it is possible to emboss in registration. However, locating the impregnated decorative paper sheet 14 on the board substrate 20 relative to the press plate must be done very accurately to enable a quality embossed-in-registration result. Consideration should be given to the fact that when the press is locked and the board is under pressure, coincidence between the structure of the press plate and the paper decorative motif must be ensured.

Coincidence is achieved using the following general process. First, the board substrate 20 is milled by removing 2 or 3 millimeters from each edge. This produces several reference planes, the board edges, and a board having tightly controlled dimensions. Then, an impregnated decorative paper sheet 14 having an exterior dimension that is 8 or 10 mm smaller than the board substrate 20 is carefully located on the board substrate 20 using a locating systems that uses edges of the board as a reference.

The decorative paper sheet 14 is beneficially attached to the board substrate 20 using static electricity. This avoids relative displacements as the board substrate 20 advances along the production line. Furthermore, the protective overlay sheet 16 (and possibly a base sheet 18) is attached to the board substrate 20.

The decorative paper sheet 14/ board substrate 20 is then located on a carriage that feeds the press machine. The carriage advances into the press machine, stops, and passes the decorative paper sheet 14/ board substrate 20 structure to positioning tweezers. The tweezers gently lay the decorative paper sheet 14/ board substrate 20 structure on the lower press plate. Then, the carriage moves out of the press machine.

After the decorative paper sheet 14/ board substrate 20 structure is placed on the lower press plate, another locating system then accurately locates that structure at a predetermined position within the press machine. This locating system beneficially also uses the milled reference edges of the board to position the decorative motif relative to the press plate 26. The press machine is then locked, the interior of the press machine is heated to its operating system, and the upper press plate 24 presses the press plate 26 into the decorative paper sheet 14/ board substrate 20 structure, fusing it into one piece. The carriage then moves back into the press machine and removes the final product.

Certain aspects of the embossed-in-registration process are very important. In particular, to avoid porosity problems it is beneficial to impregnate the papers using a slow cured melamine. This means that the press machine operates for a longer period of time and at a lower temperature then in the prior art.

While the embossed-in-registration process described above is suitable for embossed surface textures that are less than about 0.2 mm deep, deeper surface textures can cause a problem. The problem is that deep surface textures, which require relatively large press plate protrusions, tend to disturb the pressure homogeneity across the board surface. This can lead to distortions and inaccuracies in the final product. A solution to that problem is to first hollow out the board's surface where deep surface textures are to be located. Of course, accurately locating the hollowed out portions can be important. This hollowing out process can be done in the pressing line at the same time as the milling of the perimeter described above. Beneficially, using the reference edges to located the hollowed out portions. Alternatively, hollowing can be done on a different line.

The foregoing has illustrated a method of fabricating alternatives to traditional building and finishing materials, where the alternatives have a decorative motif and a press formed surface texture that are registered. That method has various fabrication advantages over the prior art. However, those who are skilled in the applicable arts will recognize numerous additions, variations, and modifications. Therefore, it is to be understood that even though numerous characteristics and advantages of the invention have been set forth, or are obvious to those skilled in the applicable arts, the disclosure is illustrative only and that changes may be made in details. Therefore, the present invention is meant to cover all embodiments that fall within the scope of the following claims.

## Claims

1. A method of fabricating a direct pressure laminate (DPL) product (40), comprising:
placing a board (20) and a melamine resin soaked sheet (14) having a decorative motif into a press machine (22, 24, 26) having a press plate (26), wherein the press plate (26) has a three dimensional surface that matches the decorative motif when the press plate (26) is heated to an operating temperature; and
locating the melamine resin soaked sheet (14) relative to the press plate (26) of the press machine (22, 24), such that the decorative motif of the melamine resin soaked sheet (14) coincides with the three dimensional surface of the press plate (26) by following steps:
firstly, the board (20) is milled by removing 2 or 3 mm from each edge, then the melamine resin soaked sheet (14) having an exterior dimension that is 8 or 10 mm smaller than the board (20) is carefully located on the board (20) using a locating system that uses edges of the board as a reference, the sheet (14)/board (20) is then located on a carriage that feeds the press machine and the carriage advances into the press machine, stops, and passes the sheet (14)/board (20) to positioning tweezers, the tweezers gently lay the sheet (14)/board (20) on a lower press plate, and another locating system then accurately locates that structure at a predetermined position within the press machine (22, 24, 26); and
curing the melamine resin while pressing the melamine resin soaked sheet(14) and the board (20) with the press plate (26) at the operating temperature such that a direct pressure laminate product (40) is produced, wherein the direct pressure laminate product (40) has a surface texture that is embossed in registration with the decorative motif,
wherein pressing the melamine resin soaked sheet (14) and the board (20) with the press plate (26), is performed at between 20 and 40 kg/cm² for 20 to 60 seconds.

2. The method of claim 1, further comprising positioning the melamine resin soaked sheet (14) on the board (20) before placing the board (20) and the melamine resin soaked sheet (14) into the press machine (22, 24).

3. The method of claim 2, further comprising attaching the melamine resin soaked sheet (14) to the board (20) using static electricity.

4. The method of claim 2 or 3, wherein positioning the melamine resin soaked sheet (14) on the board (20) includes locating a reference edge of the board (20) and positioning the melamine resin soaked sheet (14) relative to the reference edge of the board (20).

5. The method of claim 4, wherein positioning the melamine resin soaked sheet (14) relative to the press plate (26) includes locating the reference edge of the board (20) and positioning the press plate (26) relative to the reference edge of the board (20).

6. The method of any one of the preceding claims, wherein the curing is performed at a temperature between 160 and 220 °C.

7. The method of any one of the preceding claims, further comprising locating a base layer (18) under the board (20), wherein the base layer (18) is impregnated with a resin, and wherein pressing the melamine resin soaked sheet (14) and the board (20) with the press plate (26) includes pressing the melamine resin soaked sheet (14), the board (20) and the base layer (18) with the press plate (26).

8. The method of any one of the preceding claims, further comprising locating a protective overlay (16) on the melamine resin soaked sheet (14).

9. The method of any one of the preceding claims, wherein the melamine resin soaked sheet (14) is smaller than the board (20).

10. The method of any one of the preceding claims, wherein the surface texture of the direct pressure laminate product (40) is less than about 0.2 mm deep.

11. The method of any one of the preceding claims, further comprising hollowing out a portion of a surface of the board (20) before pressing the melamine resin soaked sheet (14) and the board (20) with the press plate (26).

12. The method of claim 11, wherein the direct pressure laminate (DPL) product (40) has a surface texture corresponding to the hollowed out portion that is deeper than the surface texture formed during the step of pressing.

13. The method of any one of the preceding claims, wherein the press machine includes: a base (22); a top press (24); and the press plate (26) attached to a lower surface of the top press (24).

## Patentansprüche

1. Verfahren zum Herstellen eines Direktdrucklaminat (DPL)-Produkts (40), umfassend:
Platzieren eines Bretts (20) und einer melaminharzgetränkten Folie (14), die ein dekoratives Motiv aufweist, in einer Presse (22, 24, 26), die eine Pressplatte (26) aufweist, wobei die Pressplatte (26) eine dreidimensionale Oberfläche aufweist, die mit dem dekorativen Motiv übereinstimmt, wenn die Pressplatte (26) auf eine Betriebstemperatur erwärmt wird; und
Anordnen der melaminharzgetränkten Folie (14) in Bezug auf die Pressplatte (26) der Presse (22, 24), sodass das dekorative Motiv der melaminharzgetränkten Folie (14) mit der dreidimensionalen Oberfläche der Pressplatte (26) deckungsgleich ist durch folgende Schritte: zunächst wird das Brett (20) gefräst, indem an jeder Kante 2 oder 3 mm abgetragen werden, dann wird das melaminharzgetränkte Brett (14), dessen Außendimensionen 8 oder 10 mm kleiner sind als das Brett (20), sorgfältig auf dem Brett (20) positioniert, wobei ein Positionierungssystem verwendet wird, das die Kanten des Bretts als Referenz verwendet, der Bogen (14)/das Brett (20) wird dann auf einem Schlitten positioniert, der die Pressmaschine beschickt, und der Schlitten fährt in die Pressmaschine hinein, hält an und übergibt den Bogen (14)/das Brett (20) an eine Positionierungspinzette, die Pinzette legt den Bogen (14)/das Brett (20) sanft auf eine untere Pressplatte, und ein weiteres Positionierungssystem lokalisiert dann genau diese Struktur an einer vorbestimmten Position innerhalb der Pressmaschine (22, 24, 26); und
Härten des Melaminharzes während des Pressens der melaminharzgetränkten Folie (14) und des Bretts (20) gegen die Pressplatte (26) bei Betriebstemperatur, sodass ein Direktdrucklaminat-Produkt (40) hergestellt wird, wobei das Direktdrucklaminat-Produkt (40) eine Oberflächenstruktur aufweist, die in Deckung mit dem dekorativen Motiv geprägt wird,
wobei das Pressen der melaminharzgetränkten Folie (14) und des Bretts (20) mit der Pressplatte (26) zwischen 20 und 40 kg/cm2 für 20 bis 60 Sekunden durchgeführt wird.

2. Verfahren nach Anspruch 1, ferner umfassend das Positionieren der melaminharzgetränkten Folie (14) auf dem Brett (20) vor Platzieren des Bretts (20) und der melaminharzgetränkten Folie (14) in der Presse (22, 24).

3. Verfahren nach Anspruch 2, ferner umfassend das Befestigen der melaminharzgetränkten Folie (14) am Brett (20) unter Verwendung von statischer Elektrizität.

4. Verfahren nach Anspruch 2 oder 3, wobei das Positionieren der melaminharzgetränkten Folie (14) am Brett (20) das Anordnen eines Bezugsrandes des Bretts (20) und Positionieren der melaminharzgetränkten Folie (14) in Bezug auf den Bezugsrand des Bretts (20) einschließt.

5. Verfahren nach Anspruch 4, wobei das Positionieren der melaminharzgetränkten Folie (14) in Bezug auf die Pressplatte (26) das Anordnen eines Bezugsrandes des Bretts (20) und Positionieren der Pressplatte (26) in Bezug auf den Bezugsrand des Bretts (20) einschließt.

6. Verfahren nach einem der vorhergehenden Ansprüche, wobei das Härten bei einer Temperatur zwischen 160 und 220°C durchgeführt wird.

7. Verfahren nach einem der vorhergehenden Ansprüche, ferner umfassend das Anordnen einer Grundschicht (18) unter dem Brett (20), wobei die Grundschicht (18) mit einem Harz imprägniert ist, und wobei das Pressen der melaminharzgetränkten Folie (14) und des Bretts (20) mit der Pressplatte (26) das Pressen der melaminharzgetränkten Folie (14), des Bretts (20) und der Grundschicht (18) mit der Pressplatte (26) einschließt.

8. Verfahren nach einem der vorhergehenden Ansprüche, ferner umfassend das Anordnen einer Schutzauflage (16) auf der melaminharzgetränkten Folie (14).

9. Verfahren nach einem der vorhergehenden Ansprüche, wobei die melaminharzgetränkte Folie (14) kleiner als das Brett (20) ist.

10. Verfahren nach einem der vorhergehenden Ansprüche, wobei die Oberflächenstruktur des Direktdrucklaminat-Produkts (40) kleiner als etwa 0,2 mm tief ist.

11. Verfahren nach einem der vorhergehenden Ansprüche, ferner umfassend das Aushöhlen eines Abschnitts einer Oberfläche des Bretts (20) vor dem Pressen der melaminharzgetränkten Folie (14) und des Bretts (20) mit der Pressplatte (26).

12. Verfahren nach Anspruch 11, wobei das Direktdrucklaminat (DPL)-Produkt (40) eine Oberflächenstruktur aufweist, die dem ausgehöhlten Abschnitt entspricht, der tiefer als die Oberflächenstruktur ist, die während des Pressschrittes gebildet wird.

13. Verfahren nach einem der vorhergehenden Ansprüche, wobei die Presse aufweist: eine Basis (22); eine obere Presse (24); und die Pressplatte (26), die an einer unteren Oberfläche der oberen Presse (24) befestigt ist.

## Revendications

1. Procédé de fabrication d'un produit (40) stratifié à pression directe (DPL), comprenant :
la mise en place d'une planche (20) et d'une feuille imbibée de résine de mélamine (14) ayant un motif décoratif dans une machine de pressage (22, 24, 26) ayant une plaque de pressage (26), dans lequel la plaque de pressage (26) a une surface tridimensionnelle qui correspond au motif décoratif lorsque la plaque de pressage (26) est chauffée à une température de fonctionnement ; et
la disposition de la feuille imbibée de résine de mélamine (14) par rapport à la plaque de pressage (26) de la machine de pressage (22, 24), de sorte que le motif décoratif de la feuille imbibée de résine de mélamine (14) coïncide avec la surface tridimensionnelle de la plaque de pressage (26) ; par les étapes suivantes :
tout d'abord, la planche (20) est fraisé en enlevant 2 ou 3 mm de chaque bord, puis la feuille (14) imbibée de résine de mélamine ayant une dimension extérieure inférieure de 8 ou 10 mm à celle de la planche (20) est soigneusement positionnée sur la planche (20) à l'aide d'un système de localisation qui utilise les bords de la planche comme référence, la feuille (14)/la planche (20) est ensuite placée sur un chariot qui alimente la presse et le chariot avance dans la presse, s'arrête et passe la feuille (14)/la planche (20) à des pinces de positionnement, les pinces posent délicatement la feuille (14)/la planche (20) sur une plaque de presse inférieure, et un autre système de localisation place ensuite avec précision cette structure à une position prédéterminée dans la presse (22, 24, 26) ; et
le séchage de la résine de mélamine tout en pressant la feuille imbibée de résine de mélamine (14) et la planche (20) avec la plaque de pressage (26) à la température de fonctionnement de sorte à produire un produit stratifié à pression directe (40), dans lequel le produit stratifié à pression directe (40) a une texture de surface qui est en relief en alignement avec le motif décoratif,
dans lequel le pressage de la feuille imbibée de résine de mélamine (14) et de la planche (20) avec la plaque de pressage (26), est réalisée entre 20 à 40 Kg/cm² pendant 20 à 60 secondes.

2. Procédé selon la revendication 1, comprenant en outre le positionnement de la feuille imbibée de résine de mélamine (14) sur la planche (20) avant la mise en place de la planche (20) et de la feuille imbibée de résine de mélamine (14) dans la machine de pressage (22, 24).

3. Procédé selon la revendication 2, comprenant en outre la liaison de la feuille imbibée de résine de mélamine (14) à la planche (20) en utilisant l'électricité statique.

4. Procédé selon la revendication 2 ou 3, dans lequel le positionnement de la feuille imbibée de résine de mélamine (14) sur la planche (20) comporte la disposition d'un bord de référence de la planche (20) et le positionnement de la feuille imbibée de résine de mélamine (14) par rapport au bord de référence de la planche (20).

5. Procédé selon la revendication 4, dans lequel le positionnement de la feuille imbibée de résine de mélamine (14) par rapport à la plaque de pressage (26) comporte la disposition du bord de référence de la planche (20) et le positionnement de la plaque de pressage (26) par rapport au bord de référence de la planche (20).

6. Procédé selon l'une quelconque des revendications précédentes, dans lequel le séchage est réalisé à une température entre 160 et 220 °C.

7. Procédé selon l'une quelconque des revendications précédentes, comprenant en outre la disposition d'une couche de base (18) sous la planche (20), dans lequel la couche de base (18) est imprégnée d'une résine, et dans lequel le pressage de la feuille imbibée de résine de mélamine (14) et de la planche (20) avec la plaque de pressage (26) comporte le pressage de la feuille imbibée de résine de mélamine (14), de la planche (20) et de la couche de base (18) avec la plaque de pressage (26).

8. Procédé selon l'une quelconque des revendications précédentes, comprenant en outre la disposition d'une superposition protectrice (16) sur la feuille imbibée de résine de mélamine (14).

9. Procédé selon l'une quelconque des revendications précédentes, dans lequel la feuille imbibée de résine de mélamine (14) est plus petite que la planche (20).

10. Procédé selon l'une quelconque des revendications précédentes, dans lequel la texture de surface du produit stratifié à pression directe (40) est inférieure à 0,2 mm de profondeur.

11. Procédé selon l'une quelconque des revendications précédentes, comprenant en outre le creusement d'une portion d'une surface de la planche (20) avant de presser la feuille imbibée de résine de mélamine (14) et la planche (20) avec la plaque de pressage (26).

12. Procédé selon la revendication 11, dans lequel le produit (40) stratifié à pression directe (DPL) a une texture de surface correspondant à la portion creusée qui est plus profonde que la texture de surface formée pendant l'étape de pressage.

13. Procédé selon l'une quelconque des revendications précédentes, dans lequel la machine de pressage comporte : une base (22) ; une presse supérieure (24) ; et la plaque de pressage (26) reliée à une surface inférieure de la presse supérieure (24).
